# EUROPÄISCHE PATENTSCHRIFT

(11) **EP 0 794 503 B1**
(45) Veröffentlichungstag und Bekanntmachung des Hinweises auf die Patenterteilung: **25.08.2004**
(21) Anmeldenummer: 97103543.1
(22) Anmeldetag: 04.03.1997
(51) Int. Cl.: G06K 13/06, G06K 7/00

(54) **Führung für einen dem Transport von Datenkarten zwischen einer Eingabe-/Entnahmeposition und einer Lese-/Schreibposition dienenden Schlitten**
Guidance for carriage used for conveying data cards between entrance position and read/write position
Guidage pour un chariot utilises pour le transport de cartes de données entre une position d'entrée et une position de lecture/écriture

(30) Priorität: 08.03.1996 DE 29604319 U
(43) Veröffentlichungstag der Anmeldung: 10.09.1997
(73) Patentinhaber: Siemens Aktiengesellschaft, 80333 München (DE)
(72) Erfinder: Hautvast, Heinz-Josef, Dipl.-Ing, 78086 Brigachtal (DE); Hügle, Axel, Dipl.-Ing., 78120 Furtwangen (DE)

(56) Entgegenhaltungen:
- US-A- 5 055 970
- US-A- 5 202 551

## Beschreibung

Die Erfindung betrifft eine Führung für einen dem Transport von Datenkarten zwischen einer Eingabe-/Entnahmeposition und einer Lese-/Schreibposition dienenden Schlitten in einem Gerät mit vorzugsweise quaderförmigem Gehäuse, wobei der Schlitten einerseits in der Lese-/Schreibposition, welche durch einen Kontaktfedersatz definiert ist, unzugänglich verriegelt ist, andererseits derart ausgebildet ist, daß in der Eingabe-/Entnahmeposition ein loses Auflegen und Entnehmen der Datenkarten gewährleistet ist.

Die Kontrolle der zunehmend komplexer werdenden Arbeitszeitvorschriften für das fahrende Personal im gewerblichen Straßenverkehr macht zur personen- bzw. fahrerbezogenen Erfassung der Arbeits- und Ruhezeiten die Verwendung von mit geeigneten Speichern versehenen Datenkarten erforderlich. Fahrerbezogene Datenkarten ermöglichen ferner, und zwar in einfacher Weise, die seit längerer Zeit geforderte für Fahrer- und Fahrzeugwechsel relevante räumliche Trennung bzw. räumliche Trennbarkeit von Fahrzeugmeßwerten und Arbeitszeitdaten sowie die Erfassung von Arbeitszeitdaten gegebenenfalls in einer geeigneten verdichteten Form über einen längeren Zeitraum.

Dabei können für die Datenkartenregistrierung vorgesehene Fahrtschreiber mit einem geeigneten Speicher für sowohl Arbeitszeitdaten als auch Fahrzeugmeßwerte ausgerüstet sein. Letzterer kann am Gerät auslesbar und/oder als mobiler Speicher beispielsweise in Form einer Speicherkarte Anwendung finden. Ansonsten bleiben im Zusammenhang mit derartigen Fahrtschreibern hinsichtlich Unfallauswertung, Fahrstil- und somit Wirtschaftlichkeitsbetrachtung oder des unmittelbaren und schnellen Überblicks bei Straßenkontrollen Diagrammscheiben als Aufzeichnungsträger unverzichtbar. Die bereits im Feld befindlichen herkömmlichen Fahrtschreiber müssen verständlicherweise mittels eines zusätzlichen Gerätes für die Verwendung von Datenkarten nachgerüstet werden. Ein solches Gerät ist beispielsweise in der DE-G 94 09 354.7 beschrieben.

Die Verwendung von Datenkarten setzt aber voraus, daß die Handhabung der Datenkarten auch unter den in einem Fahrerhaus gegebenen ungünstigen Lichtverhältnissen und rauhen klimatischen Bedingungen und gegebenenfalls bei ungünstigen Einbau- oder Anordnungssituationen des betreffenden Fahrtschreibers problemlos ist. Da, um Manipulationen zu vermeiden, die Datenkarten im eingegebenen Zustand verriegelt sein sollten und wegen der im Fahrerhaus eines Nutzfahrzeuges in besonderer Weise gegebenen Verschmutzungsgefahr gegen Staub und Eindringen von Wasser geschützt sein müssen, bietet es sich an, die Datenkarten nicht durch einen Schlitz einzugeben sondern einen verschiebbaren Träger, das heißt eine Schublade bzw. einen Schlitten vorzusehen, mit dem die Datenkarten zwischen der Eingabe-/Entnahmeposition und der Lese-/Schreibposition transportiert werden können. Ein derartiger Schlitten ermöglicht ein loses Einlegen der Datenkarten in eine in geeigneter Weise ausgestaltete Fassung, er kann verriegelt werden und er bietet durch Vorsehen einer Frontblende gegenüber der Frontwand des Gehäuses des betreffenden Fahrtschreibers eine Abdichtmöglichkeit. Das bestehende Problem ist nun darin zu sehen, daß eine wirksame Abdichtung, eine sichere Kontaktierung der Datenkarten und eine möglichst kippfreie und handhabungssympathische Bewegung des Schlittens eine hohe Fertigungsqualität der Führung des Schlittens erforderlich machen, andererseits die Mittel für die Verwendung von Datenkarten in Fahrtschreibern seriengerecht und mit einem möglichst geringen Aufwand realisierbar sein sollen.

Aufgabe der vorliegenden Erfindung war es somit, mit konstruktiven Mitteln den Aufwand für eine milieugerechte hohe Qualität der Führung des Schlittens zur Aufnahme der Datenkarten so gering wie möglich zu halten.

Die Lösung der Aufgabe geht aus dem Anspruch 1 hervor. Ausführungsvarianten sind in den Unteransprüchen beschrieben.

Der besondere Vorteil der Erfindung ist darin zu sehen, daß zwischen den führenden Flächen große Abstände vermieden sind und somit auch spritzgießtechnisch enge Toleranzen eingehalten werden können, so daß auch die Gefahr des Verkantens vermieden ist. Insbesondere lassen sich die Führungselemente, welche die Bewegungsebene des Schlittens definieren, derart gestalten, daß der Schlitten spielfrei geführt, gegebenenfalls eine leichte Vorspannung quer zur Verschieberichtung geben ist, so daß eine Spielausgleichsfeder oder eine für den Schrägeinbau erforderliche Bremsfeder vermieden werden kann. Erwähnenswert ist ferner, daß bei zwei nebeneinander in einem Schlitten angeordneten Datenkartenfassungen die Nut der Nut-Rippe-Verbindung, welche der Führung in der Bewegungsebene dient, in der die beiden Fassungen trennenden Brücke ausgebildet ist, und somit eine sehr flache Anordnung gegeben ist. Eine Ausführungsvariante sieht vor, die Führungselemente an einem in ein Gehäuse einsetzbaren Bauteil auszubilden, wobei die Befestigung des Bauteils mittelbar durch Verschrauben der Leiterplatte, die unter anderem die den Datenkarten zugeordneten Kontaktfedersätze trägt, mit dem Gehäuse des betreffenden Gerätes erfolgt.

Im folgenden sei die Erfindung anhand der Zeichnungen näher erläutert. Es zeigen:
- Figur 1: eine Frontansicht eines für die Zuordnung zu einem Fahrtschreiber vorgesehenen Gerätes zur Erfassung von Arbeitszeitdaten unter Verwendung von Datenkarten,
- Figur 2: eine gegenüber Figur 1 vergrößerte Schnittdarstellung der Führung des in dem betreffenden Gerät zum Transport der Datenkarten verwendeten Schlittens,
- Figur 3: eine Frontansicht einer Ausführungsvarianten des Gerätes gemäß Figur 1,
- Figur 4: eine gegenüber Figur 3 vergrößerte Schnittdarstellung der Führung eines in dem Gerät gemäß.Figur 3 verwendeten Schlittens.

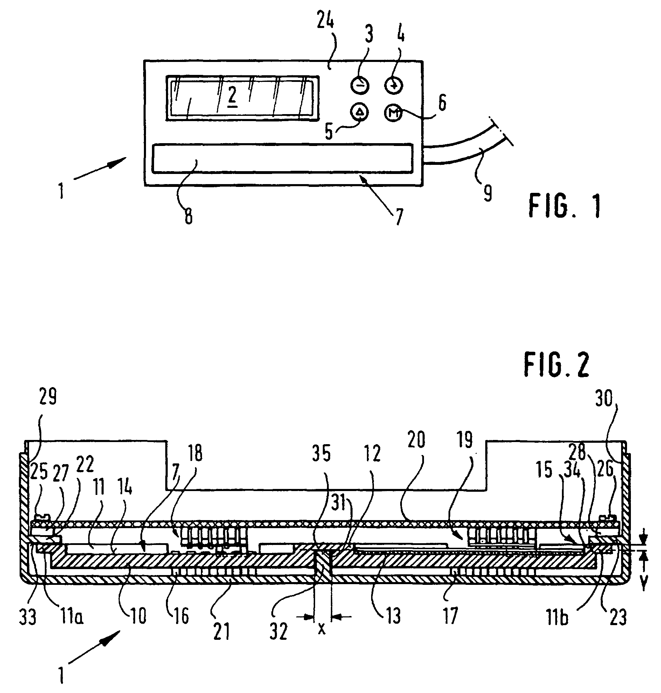

Die mit der Figur 1 dargestellte Frontansicht eines mit 1 bezeichneten Gerätes zeigt ein Display 2, mehrere Tasten 3, 4, 5 und 6 sowie ein die Datenkarten eines Fahrers und dessen Beifahrers aufnehmender schubladenähnlicher Schlitten 7, an welchem eine als Griffleiste dienende Frontblende 8 angeformt ist. Ein mit 9 bezeichnetes Kabel, welches mehrere Signalleitungen und die Energieversorgung des Gerätes 1 umfaßt, verbindet das Gerät 1 mit einem nicht dargestellten Fahrtschreiber. Dieser weist bekanntlich Einstellknöpfe auf, mit denen die Arbeitszustände der Fahrer in den Fahrtschreiber eingebbar sind, das heißt, mit denen die Registrierorgane des Fahrtschreibers derart steuerbar sind, daß auf der in einem solchen Fahrtschreiber als Speichermedium verwendeten Diagrammscheibe arbeitsarttypische Registrierungen erfolgen. Gleichzeitig werden die Stellungen der Einstellknöpfe aber auch in das Gerät 1 übertragen und dort zu Datensätzen für beispielsweise die Dauer und den Zeitpunkt der während der Durchführung eines Transportauftrages zuletzt eingelegten Pause, die Tageslenkzeit, die Lenkzeit seit der letzten Lenkzeitunterbrechung, die Doppelwochenlenkzeit und die letzte beispielsweise 8 Stunden überschreitende Ruhezeit verrechnet und abgelegt. Die Taste 6 dient dem Anwählen der jeweiligen Datenart zur Anzeige auf dem Display 2; mit den Tasten 3 und 4 wird ein "Vor- und Rückwärtsblättern" in den für die angewählte Datenart ermittelten Datensätzen ermöglicht. Die Taste 5 dient dem Öffnen des Gerätes 1 zur Eingabe bzw. zur Entnahme der Datenkarten.

Der in dem Gerät 1 vorgesehene Schlitten 7 wird im wesentlichen gebildet von einem Boden 10, einem Rahmen 11, einer Brücke 12 und der Frontblende 8. Diese Elemente sind derart an dem einteilig geformten Schlitten 7 ausgebildet, daß sie zwei flache Vertiefungen bilden, die den Datenkarten von Fahrer und Beifahrer - in Figur 2 ist eine dargestellt und mit 13 bezeichnet - als Fassungen 14 und 15 dienen, in welche die Datenkarten 13 lose einlegbar sind. An der Rückseite des Schlittens 7 sind nicht bezeichnete Freisparungen ausgeformt. Mit 16 und 17 ist jeweils eine von mehreren nebeneinander am Boden 10 angeformten Rippen bezeichnet, die jeweils eine im einzelnen nicht bezeichnete Rampe bilden. Diese Rampen greifen in die genannten Freisparungen und somit in die Fassungen 14 und 15 ein, wenn der Schlitten 7 sich in der Lese-/Schreibposition befindet. Dabei überragen die Rampen den Boden 10 des Schlittens 7 um ein geringes Maß, so daß eingelegte Datenkarten 13 in der Lese-/Schreibposition gegen den Rampen zugeordnete Kontaktfedersätze 18 und 19 angehoben und auf diese Weise kontaktiert sind.

Die Kontaktfedersätze 18 und 19 sind ihrerseits auf einer Leiterplatte 20 angeordnet, welche auf am Unterteil 21 des Gehäuses des Gerätes 1 angeformten Leisten 22 und 23 befestigt ist. Das Oberteil des Gehäuses stellt ein aus der Frontwand 24 und einem nicht dargestellten Deckel gebildetes Bauteil dar. Der Befestigung der Leiterplatte 20 dienen mehrere Schrauben, von denen zwei 25 und 26 in Figur 2 dargestellt sind. Den Schrauben sind an den Leisten 22 und 23 angeformte Gewindebuchsen 27 und 28 zugeordnet. Ferner sorgen nicht dargestellte Paßstifte für eine exakte Ausrichtung der Leiterplatte 20 in bezug auf die Seitenführung des Schlittens 7. Letztere wird von einer Nut-Rippe-Verbindung zwischen dem Schlitten 7 und dem Unterteil 21 des Gehäuses gebildet. Das heißt, der Schlitten 7 ist nicht zwischen den Seitenwänden 29 und 30 des Unterteils 21 des Gehäuses geführt, sondern mittels einer in der Brücke 12 ausgebildeten Nut 31 an einer vorzugsweise in der Mittenebene des Unterteils 21 des Gehäuses ausgebildeten Rippe 32. Senkrecht hierzu ist der Schlitten 7 dadurch geführt, daß der Rahmen 11, vorzugsweise an ihm angeformte Stege 11a und 11b, an den Flanken 33 und 34 der Leisten 22 und 23 anliegen und gleichzeitig der Schlitten 7 sich auf der Stirnfläche 35 der Rippe 32 abstützt.

Die Maße x und y sind gegenüber den übrigen Abmessungen des Schlittens 7 und des Unterteils 21 sehr klein, das heißt es können spritzgießtechnisch enge Fertigungstoleranzen und somit eine hohe Führungsgenauigkeit eingehalten werden. Vorzugsweise wird das Maß y formtechnisch derart eingestellt, daß eine gewisse Preßpassung und somit ein Schiebesitz gegeben ist. Außerdem ist es zweckmäßig, die Stirnfläche 35 quer zur Verschieberichtung des Schlittens 7 flach gewölbt auszubilden, so daß sich eine linienförmige Auflage des Schlittens 7 auf der Rippe 32 ergibt.

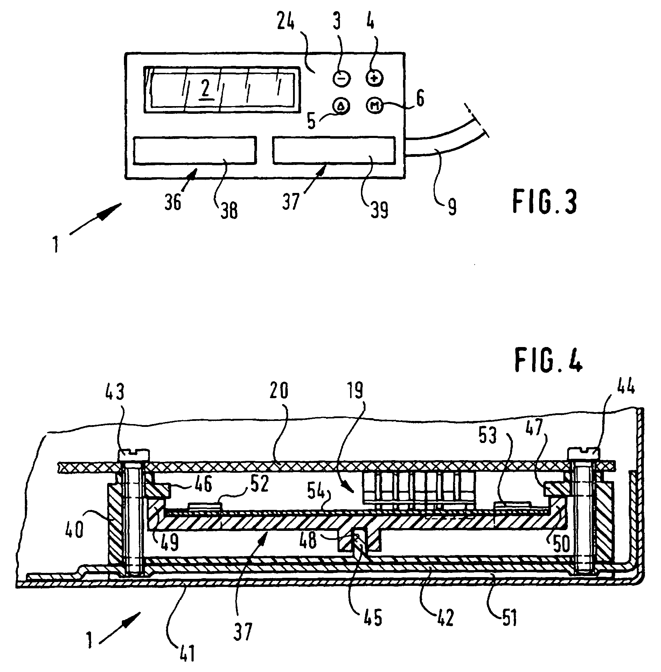

Bei der in Figur 3 dargestellten Ausführungsvarianten sind bei sonst gleichen Verhältnissen für die Datenkarten vom Fahrer und Beifahrer getrennte Schlitten 36 und 37 vorgesehen. Mit 38 und 39 sind die Frontblenden der Schlitten 36 und 37 bezeichnet. Für die Führung der Schlitten 36 und 37 ist jeweils ein Bauteil 40 vorgesehen, welches mit dem Gehäuse, das bei der Ausführungsvarianten gemäß den Figuren 3 und 4 beispielsweise aus Blech hergestellt ist, verschraubt ist. Selbstverständlich kann auch ein Gehäuse aus Kunststoff vorgesehen werden, in welchem die Bauteile 40 befestigt werden oder es wird in einem aus Blech hergestellten Gehäuse ein Bauteil eingesetzt, in welchem nur ein Schlitten gemäß dem vorstehen beschriebenen Ausführungsbeispiel geführt ist.

Wie die Figur 4 zeigt sind in dem Unterteil 41 des Gehäuses, Montageschienen 42, von denen eine sichtbar ist, befestigt. Die Montageschienen 42 dienen dem Befestigen der Bauteile 40, in dem diese beim Befestigen der Leiterplatte 20 mit dem Boden des Unterteils 41 verspannt werden. Hierzu dienen Schrauben 43 und 44, denen in den Montageschienen 42 geeignete Gewinde zugeordnet sind. Auf diese Weise wird ein Aufbohren des Gehäuses vermieden. Das Bauteil 40 ist mit einer Rippe 45 sowie Leisten 46 und 47 versehen, so daß der Schlitten 37 in der bereits beschriebenen Weise geführt ist. Das heißt, die zwischen dem Schlitten 37 und dem Bauteil 40 ist einerseits eine Nut-Rippe-Verbindung vorgesehen - die in dem Schlitten 37 ausgebildete Nut ist mit 48 bezeichnet -; andererseits stehen am Schlitten 37 seitlich ausgebildete Wangen 49 und 50 mit ihren Stirnflächen mit nicht näher bezeichneten Flanken der Leisten 46 und 47 in Führungskontakt. Außerdem zeigt die Figur 4, daß in dem Bauteil 40 den Montageschienen 42 zugeordnete Nute 51 ausgebildet sind. 52 und 53 bezeichnen Endanschläge für die Datenkarten, von denen eine in Figur 4 dargestellt und mit 54 bezeichnet ist.

Der Vollständigkeit halber sei noch erwähnt, daß bei der Montage des Bauteils 40 bzw. der beiden Bauteile 40 diese zunächst an der Leiterplatte 20 durch Aufstecken "angeheftet" werden. Hierzu sind an den Bauteilen 40 geeignete Paßstifte angeformt. Danach erfolgt das Festschrauben der Leiterplatte 20 und dabei mittelbar auch das Befestigen der Bauteile 40. Es sei ferner noch darauf hingewiesen, daß der bzw. die Schlitten 7, 37 und 38 relativ leichtgägnig geführt sein können, und daß innerhalb einer kurzen Strecke vor der Eingabe-/Entnahmepossition durch das Anbringen beispielsweise von Noppen eine Bremsfunktion ausgebildet sein kann.

## Patentansprüche

1. Führung für einen dem Transport von Datenkarten zwischen einer Eingabe-/Entnahmeposition und einer Lese-/Schreibposition dienenden Schlitten in einem Gerät mit vorzugsweise quaderförmigem Gehäuse, wobei der Schlitten einerseits in der Lese-/Schreibposition, welche durch einen Kontaktfedersatz definiert ist, unzugänglich verriegelt ist, andererseits derart ausgebildet ist, dass in der Eingabe-/Entnahmeposition ein loses Auflegen und Entnehmen der Datenkarten gewährleistet ist, **dadurch gekennzeichnet**
- **dass** an dem Schlitten (7) vorzugsweise in dessen Mittenebene eine Nut (31) ausgebildet ist,
- **dass** der Nut (31) eine in Bewegungsrichtung des Schlittens (7) verlaufende gehäusefeste Rippe (32) zugeordnet ist,
- **dass** parallel zur Bewegungsebene des Schlittens (7) beidseitig der Rippe (32) Leisten (22, 23) gehäusefest vorgesehen sind und
- **dass** der Schlitten (7) derart gestaltet ist, dass er zwischen der Stirnfläche (35) der Rippe (32) und den der Ebene der Stirnfläche (35) der Rippe (32) zugewandten Flanken (33, 34) der Leisten (22, 23) angeordnet ist.

2. Führung nach Anspruch 1,
**dadurch gekennzeichnet,**
**daß** der Schlitten (7) zwischen der Stirnfläche (35) der Rippe (32) und den Flanken (33, 34) der Leisten (22, 23) spielfrei angeordnet ist.

3. Führung nach Anspruch 1,
**dadurch gekennzeichnet,**
**daß** die Rippe (32)und die Leisten (22, 23) unmittelbar am Gehäuse des Gerätes (1) ausgebildet sind.

4. Führung nach Anspruch 1,
**dadurch gekennzeichnet,**
**daß** die Rippe (45) und die Leisten (46, 47) an einem im Gehäuse des Gerätes (1) befestigbaren Bauteil (40) ausgebildet sind.

## Claims

1. Guide for a carriage used for conveying data cards between an insertion/removal position and a reading/writing position in a device with a preferably cuboidal housing, the carriage on the one hand being inaccessibly locked in the reading/writing position, which is defined by a set of contact springs, on the other hand being formed in such a way that loose placement and removal of the data cards is ensured in the insertion/removal position, **characterized**
- **in that** a groove (31) is formed on the carriage (7), preferably in its centre plane,
- **in that** the groove (31) is assigned a rib (32) which is fixed to the housing and runs in the direction of movement of the carriage (7),
- **in that** strips (22, 23) are provided, fixed to the housing and parallel to the plane of movement of the carriage (7), on both sides of the rib (32) and
- **in that** the carriage (7) is designed in such a way that it is arranged between the end face (35) of the rib (32) and the flanks (33, 34) of the strips (22, 23) facing the plane of the end face (35) of the rib (32).

2. Guide according to Claim 1, **characterized in that** the carriage (7) is arranged in a play-free manner between the end face (35) of the rib (32) and the flanks (33, 34) of the strips (22, 23).

3. Guide according to Claim 1, **characterized in that** the rib (32) and the strips (22, 23) are formed directly on the housing of the device (1).

4. Guide according to Claim 1, **characterized in that** the rib (45) and the strips (46, 47) are formed on a component (40) which can be fastened in the housing of the device (1).

## Revendications

1. Guide pour un chariot servant au transport de cartes de données entre une position d'entrée/prélèvement et une position de lecture/écriture dans un appareil comprenant un boîtier de préférence parallélépipédique, le chariot étant verrouillé de façon inaccessible d'une part dans la position de lecture/écriture, qui est définie par un jeu de ressorts de contact, et conçu d'autre part de telle sorte qu'une pose et un prélèvement amovibles des cartes de données sont garanties dans la position d'entrée/prélèvement, **caractérisé**
- **en ce qu'**une rainure (31) est réalisée sur le chariot (7) de préférence dans son plan central,
- **en ce qu'**une nervure (32) solidaire du boîtier et agencée dans le sens de déplacement du chariot (7) est attribuée à la rainure (31),
- **en ce que** des baguettes (22, 23) sont prévues de façon solidaire du boîtier parallèlement au plan de déplacement du chariot (7) des deux côtés de la nervure (32) et
- **en ce que** le chariot (7) est conçu de telle sorte qu'il est disposé entre la surface avant (35) de la nervure (32) et les flancs (33, 34) des baguettes (22, 23) tournées vers le plan de la surface avant (35) de la nervure (32).

2. Guide selon la revendication 1,
**caractérisé en ce**
**que** le chariot (7) est disposé sans jeu entre la face frontale (35) de la nervure (32) et les flancs (33, 34) des baguettes (22, 23).

3. Guide selon la revendication 1,
**caractérisé en ce**
**que** la nervure (32) et les baguettes (22, 23) sont conçues directement sur le boîtier de l'appareil (1).

4. Guide selon la revendication 1,
**caractérisé en ce**
**que** la nervure (45) et les baguettes (46, 47) sont réalisées sur un composant (40) pouvant être fixé dans le boîtier de l'appareil (1).
